# EUROPEAN PATENT SPECIFICATION

(11) **EP 2 336 015 B1**
(45) Date of publication and mention of the grant of the patent: **25.11.2015**
(21) Application number: 10192573.3
(22) Date of filing: 25.11.2010
(51) Int. Cl.: B62K 19/18, A47B 3/091, A47C 4/04, E05D 11/10, E06C 1/32, B62K 15/00, E04C 3/00, E06C 7/50

(54) **Speedy pivoting-and-fixing device for a foldable structure**
Schnelle Dreh- und Befestigungsvorrichtung für eine zusammenklappbare Struktur
Dispositif de rotation et de fixation rapide pour structure pliable

(30) Priority: 21.12.2009 TW 098143920
(43) Date of publication of application: 22.06.2011
(73) Proprietor: Chu, Shao-Hua, Taipei 10478 (CN)
(72) Inventor: Chu, Shao-Hua, Taipei 10478 (CN)
(74) Representative: Beck & Rössig European Patent Attorneys

(56) References cited:
- WO-A-02/092417
- DE-U1- 9 317 737
- GB-A- 1 138 463
- JP-B1- S4 825 544
- JP-U- S5 070 646
- US-A- 83 795
- US-A- 719 450
- US-A1- 2002 144 350
- US-B1- 6 192 773

## Description

The present invention relates to a speedy pivoting-and-fixing device for a foldable structure comprising the features of the preamble portion of claim 1. The device allows for various frame structures to be joined in a speedy and convenient way and, when being folded, securely positioned into place.

Currently, existing foldable structures such as those of foldable bicycle frames, foldable cat ladders, foldable tables & chairs, foldable sport equipment, foldable lamps, foldable beds, foldable sun shields/rain sheds, foldable handles, foldable foot stands, foldable connecting links and the like, mostly fail to provide an ideal speedy pivoting-and-fixing device. Consequently, it is impossible to join, release or pivotally fold the structures in a speedy way by means of an identical mechanism, making it impossible for the folded structures to be completely secured against loosening.

For example, a foldable bicycle currently available mostly has drawbacks that, after being folded, it has very bulky volume and large thickness and the bicycle frame is unable to be fixed. In order for the bicycle frame to be folded, the foldable bicycle is typically provided with a joint at a folding position of the bicycle frame so that, by virtue of the joining property of the joint that it allows for detachment of a bicycle skeleton, the bicycle body can be folded conveniently and so that the bicycle skeleton can be re-joined together for use by means of the joint.

As a key mechanism for folding a bicycle, the joint must be made to be safe in structure, convenient to operate, and miniaturized in volume and lightweight. However, existing joints for bicycle frames fail to satisfy all these requirements. In other words, they either have excessively huge volume, width or weight or require use of a tool in operation, or otherwise, operation thereof is time- and labor-consuming and complex. Furthermore, the bicycle frame as folded cannot be fixed directly by use of the existing joint mechanism, making the bicycle body very unstable and inconvenient to carry about, which is known as a prominent drawback of the prior art. Accordingly, it is a focus of development in the art to develop a speedy pivoting-and-fixing device for a foldable structure that is safe in use, small in volume and width, lightweight, easy and speedy to operate, and capable of effectively fixing the folded structure.

As another example, many foldable cat ladders currently available have drawbacks that pivoting-and-fixing devices of their frames have inadequate joining strength when being unfolded and the cat ladders are unable to be effectively fixed when being folded. Accordingly, it is also a focus of development in the art to develop a speedy pivoting-and-fixing device for a foldable cat ladder that is easier, safer and speedier to operate.

A speedy pivoting-and-fixing device as defined by preamble portion of claim 1 is known from JP 550 70646 A1 from WO 02/092417 A. Further speedy pivoting-and-fixing devices are known and US 6,192,773 B1.

The object of the present invention is to provide a speedy pivoting-and-fixing device for a foldable structure, which allows for a structure to be unfolded through a pivoting movement to an included angle of 90° or 180° and is also capable of completely fix the folded structure against loosening. Accordingly, the speedy pivoting-and-fixing device of the present invention features a simple structure, small volume, a narrow width, high safety, and simple operation.

The object of the present invention is to provide a novel structure for a speedy pivoting-and-fixing device for a foldable structure.

This technical problem is solved by a device according to claim 1. Advantageous embodimens are indicated in further claims.

The speedy pivoting-and-fixing device for a foldable structure according to the invention allows for a structure to be unfolded through a pivoting movement to an included angle of 90° or 180° and is also capable of completely fix the folded structure against loosening. Accordingly, the speedy pivoting-and-fixing device of the invention features a simple structure, small volume, a narrow width, high safety, and simple operation.

For further understanding of the objectives, structural features and other effects of the present invention, a detailed description will be made hereinafter with reference to the attached drawings.
FIG. 1 is a top view of a first embodiment of the present invention in a joined status;
FIG. 2 is a front view of the first embodiment of the present invention in the joined status;
FIG. 3 is a side view of the first embodiment of the present invention in the joined status;
FIG. 4 is a lateral cross-sectional view of the first embodiment of the present invention in the joined status;
FIG. 5 is a longitudinal cross-sectional view of the first embodiment of the present invention in the joined status;
FIG. 6 is a side cross-sectional view of the first embodiment of the present invention in the joined status;
FIG. 7 is a lateral cross-sectional view of the first embodiment of the present invention when being folded by 90° but having not been joined and fixed;
FIG. 8 is a lateral cross-sectional view of the first embodiment of the present invention when being folded by 180° and having been joined and fixed;
FIG. 9 is a top view of a second embodiment of the present invention in a joined status;
FIG. 10 is a front view of the second embodiment of the present invention in the joined status;
FIG. 11 is a side view of the second embodiment of the present invention in the joined status;
FIG. 12 is a lateral cross-sectional view of the second embodiment of the present invention in the joined status;
FIG. 13 is a longitudinal cross-sectional view of the second embodiment of the present invention in the joined status;
FIG. 14 is a side cross-sectional view of the second embodiment of the present invention in the joined status;
FIG. 15 is a lateral cross-sectional view of the second embodiment of the present invention when being folded by 90° but having not been joined and fixed; and
FIG. 16 is a lateral cross-sectional view of the second embodiment of the present invention when being folded by 180° and having been joined and fixed.

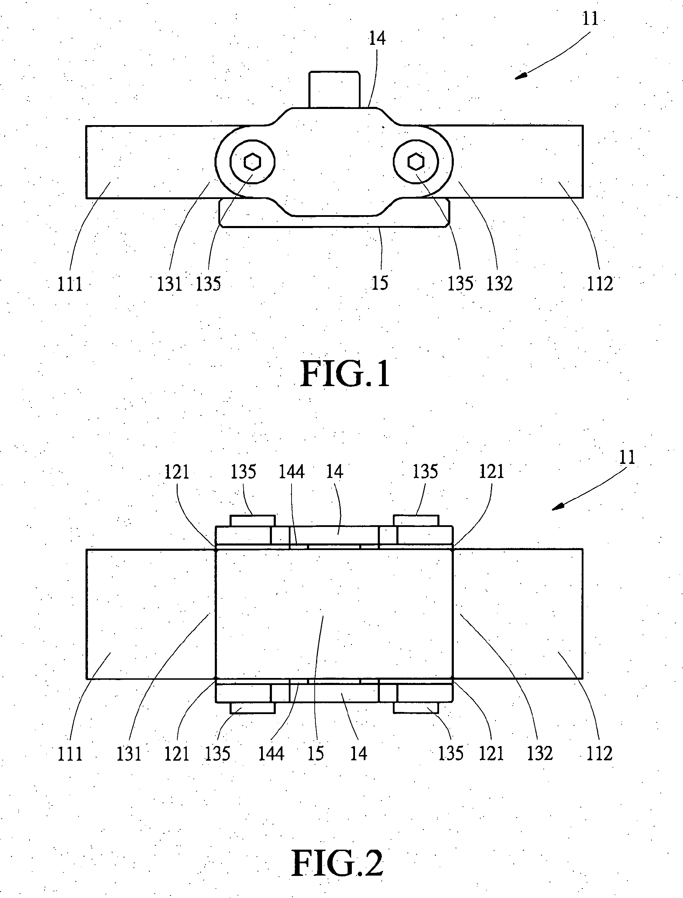

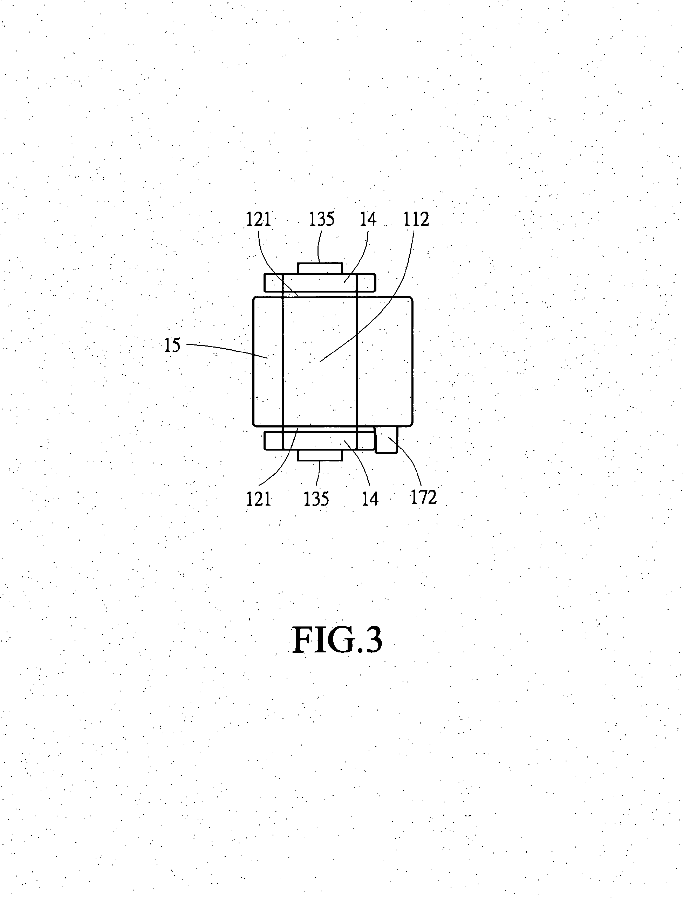

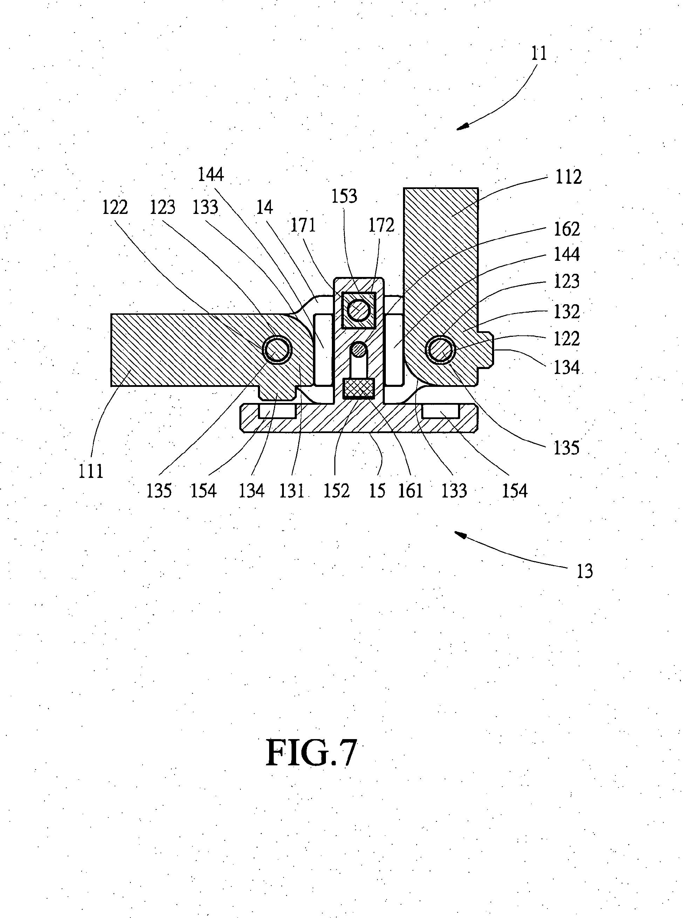

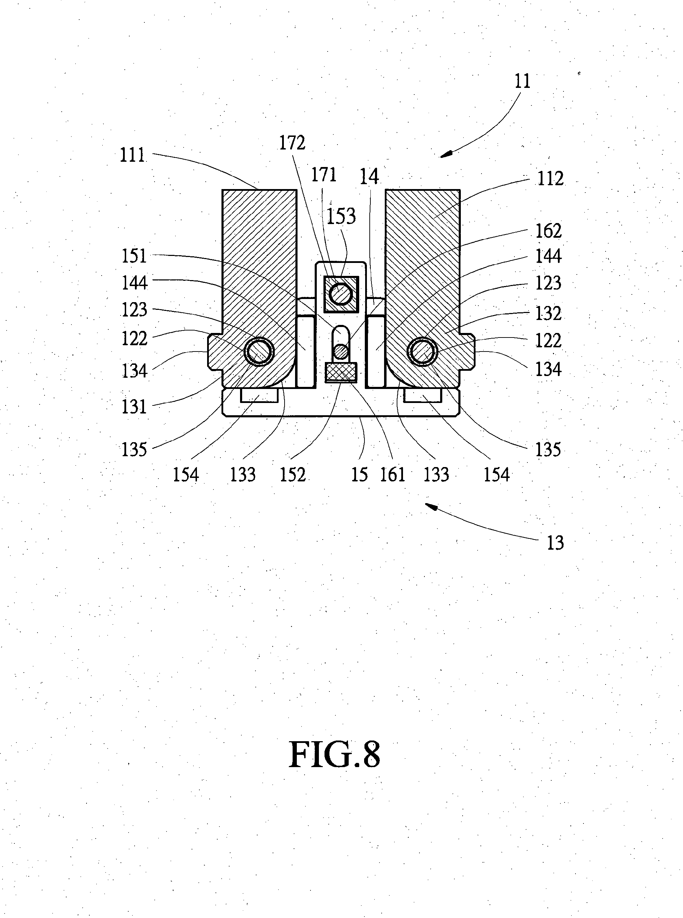

FIGS. 1 to 8 illustrate a first embodiment of a speedy pivoting-and-fixing device for a foldable structure of the present invention. The speedy pivoting-and-fixing device for a foldable structure mainly comprises a structure assembly 11, a pivot assembly 13, a base assembly 14 and a pin 15.

The structure assembly 11 comprises a first structure 111 and a second structure 112. The pivot assembly 13 comprises a first pivot 131 and a second pivot 132 disposed at proximal ends of the first and the second structures 111, 112 respectively. Each of the first pivot 131 and the second pivot 132 is formed with an axial hole 122, and may be formed with a cambered surface 133 at a proximal end thereof so that the first structure 111 and the second structure 112 of the structure assembly 11 can be pivoted by 90° and 180° relative to each other. Projections 134, i.e. tongues or tenons may be disposed on the first and the second pivots 131, 132 at positions where the first and the second pivots 131, 132 are joined to the pin 15, while recesses 154 may be formed on the pin 15 at positions where the pin 15 is joined to the first and the second pivots 131, 132. Bearings 121 are disposed at interfaces between the first and the second pivots 131, 132 and the base assembly 14, and bearings 123 may also be disposed inside the axial holes 122 of the first and the second pivots 131, 132.

On the base assembly 14, through-holes 143 corresponding to the axial holes 122 of the first and the second pivots 131, 132 are formed so that, by means of axial bolts 135, the base assembly 14 can be effectively attached to the first and the second pivots 131, 132 or the first and the second pivots 131, 132 can be pivoted into place in a speedy way. The base assembly 14 is formed with a flange 144. The flange 144 is adapted to fix and prevent the first and the second pivots 131, 132 from rotating or pivoting in a locked state of the pin, and also acts as a support against which the pin 15 or a guide slot disposed in the pin 15 abuts when applying a force to compressively fix the pivot assembly 13. The pin 15 fixes the first and the second pivots 131, 132 against loosening in a compressive way.

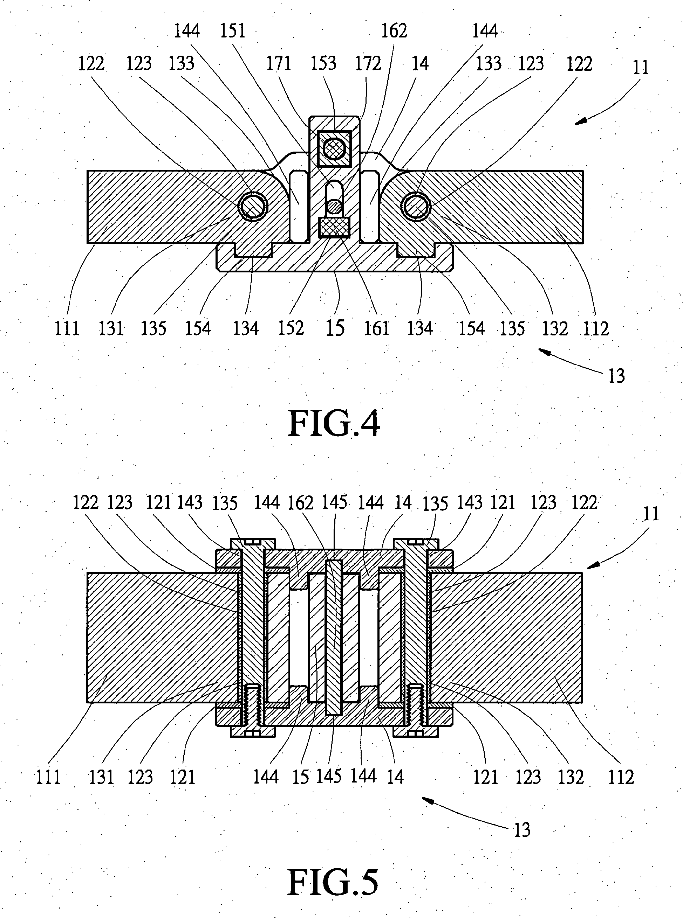

As shown in FIGS. 4 to 6, the pin 15 is of a T-shaped configuration and is provided with a magnetic compressing assembly 16 and a pressing fastener assembly 17 for preventing loosening. The magnetic compressing assembly 16 is comprised of a magnet 161 and a central column 162 made of a steel material. The central column 162 is inserted through a central column guide slot 151 of the pin 15, with two ends of the central column 162 being disposed into central column holes 145 of the base assembly 14. The magnet 161 is disposed into a hollow magnet chamber 152 of the pin so that, by means of the magnetic force generated between the magnet 161 and the central column 162, a compressive force can be generated to compress the pin 15 against the pivot assembly 13 to prevent loosening of the pivot assembly 13. The pressing fastener assembly 17 is comprised of a magnet assembly 171 that can provide a repulsion force and a pressing fastener 172. The magnet assembly 171 is an elastic component and may also be replaced by a common spring. The pressing fastener assembly 17 is disposed in a hollow pressing fastener chamber 153 of the pin 15. The pressing fastener assembly 17 may also serve a compressive function so that, by means of the repulsion force of the magnet assembly 171, a bevel 173 of the pressing fastener 172 can be compressed against the base assembly 14. Thus, a pushing and compressing effect is generated by the pressing fastener 172 so that the pressing fastener assembly 17 can fasten the pin 15 to effectively prevent loosening of the pin 15.

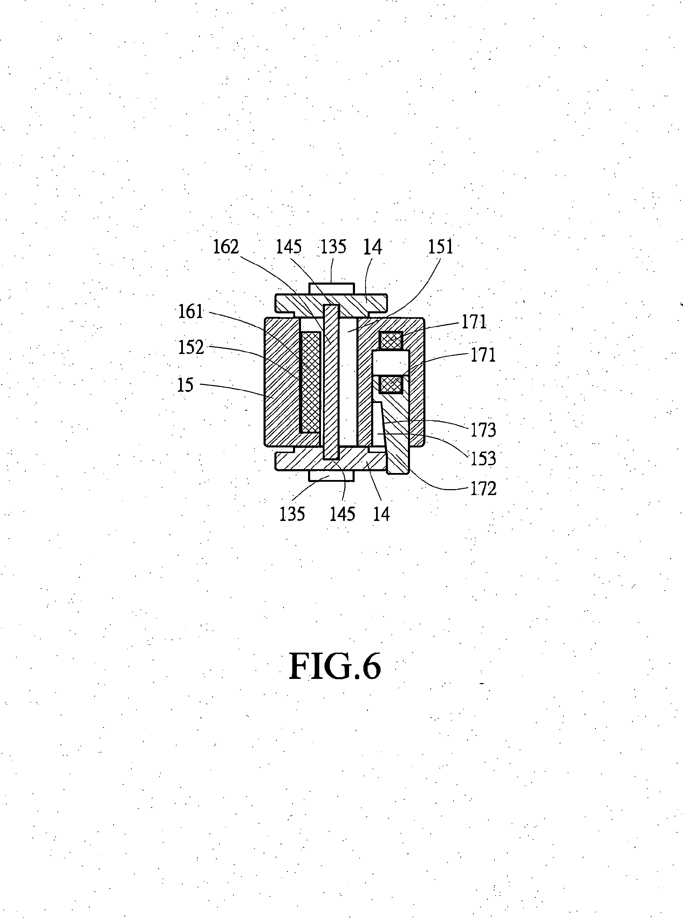

As shown in FIGS. 6 to 8, if one desires to loosen and fold the first and the second structures, he or she only needs to push the pressing fastener 172 with a hand so that the pressing fastener 172 is released from being blocked by the base assembly 14 and then pushes the pin 15 to the locating point so that the first and the second pivots 131, 132 are released from being compressed by the pin 15. Thus, the first and the second structures can be loosened to pivot the first and the second pivots 131, 132 by 90° or 180°. More particularly, after the first and the second pivots 131, 132 have pivoted by 90° or 180° and folded, the user can push the pin 15 to abut against the first and the second pivots 131, 132 again, at which point the pressing fastener 172 will spring back to fasten the pin 15 so that the pivot assembly 13 will be fixed again as being compressed by the pin 15 without possibility of getting loose.

According to the speedy pivoting-and-fixing device for a foldable structure of this embodiment of the present invention, by pushing the pressing fastener 172 and moving the pin 15, the first and the second structures can be folded and fixed properly in a speedy way. When it is desired to restore the original joining status, simply pushing the pressing fastener 172 can release the first and the second pivots 131, 132 and pivot the first and the second pivots 131, 132 by 90° or 180° to the locating point. Then, by moving the pin 15, the pin 15 is joined tightly to the first and the second pivots 131, 132 so that, by means of the magnetic force generated between the magnet 161 and the central column 162, a compressive force can be generated. Furthermore, after the pressing fastener 172 springs back, the pin 15 can be fastened so that the first and the second pivots 131, 132 can be fixed tightly by the pin 15, thereby accomplishing the operations of joining and fixing the first and the second structures. As the speedy pivoting-and-fixing device for a foldable structure of the present invention has two compressive forces that can prevent loosening, it has superior safety performance and is effective in preventing undesired consequences caused by a false touch. Moreover, it has a sturdy structure and allows for quick and simple operation.

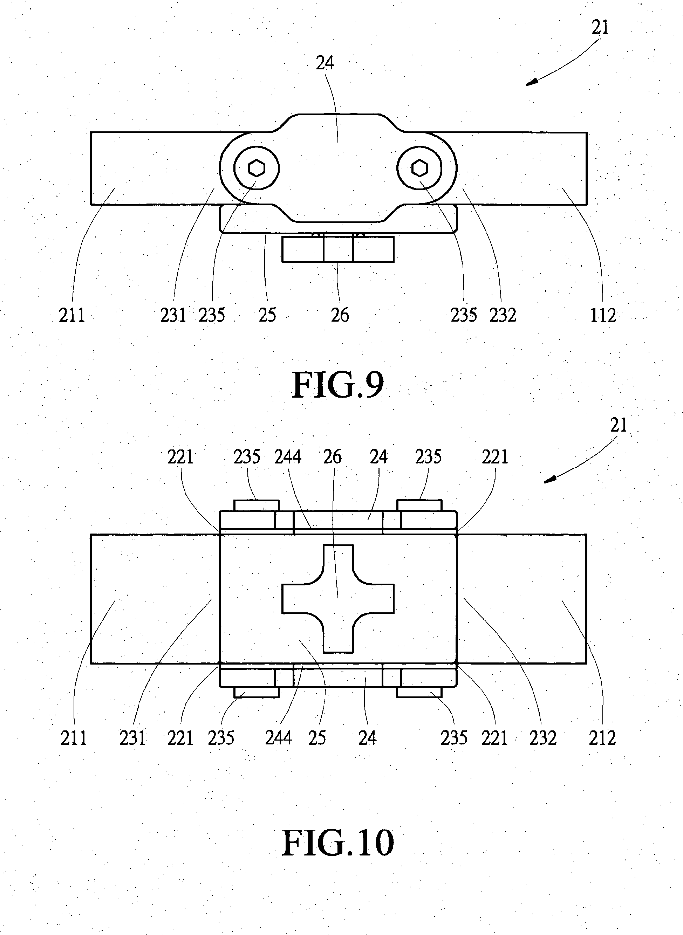

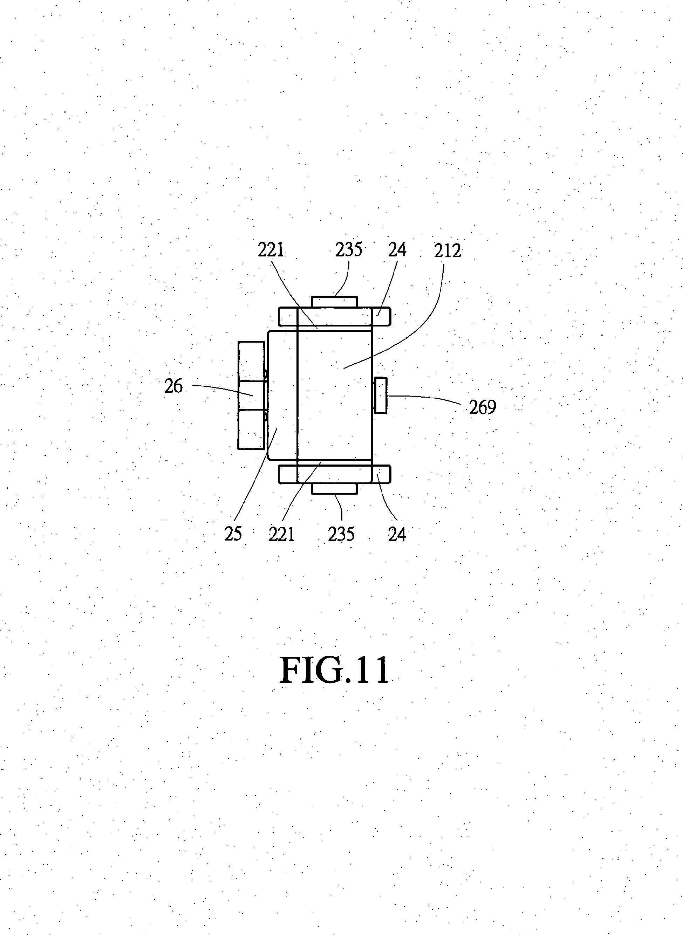

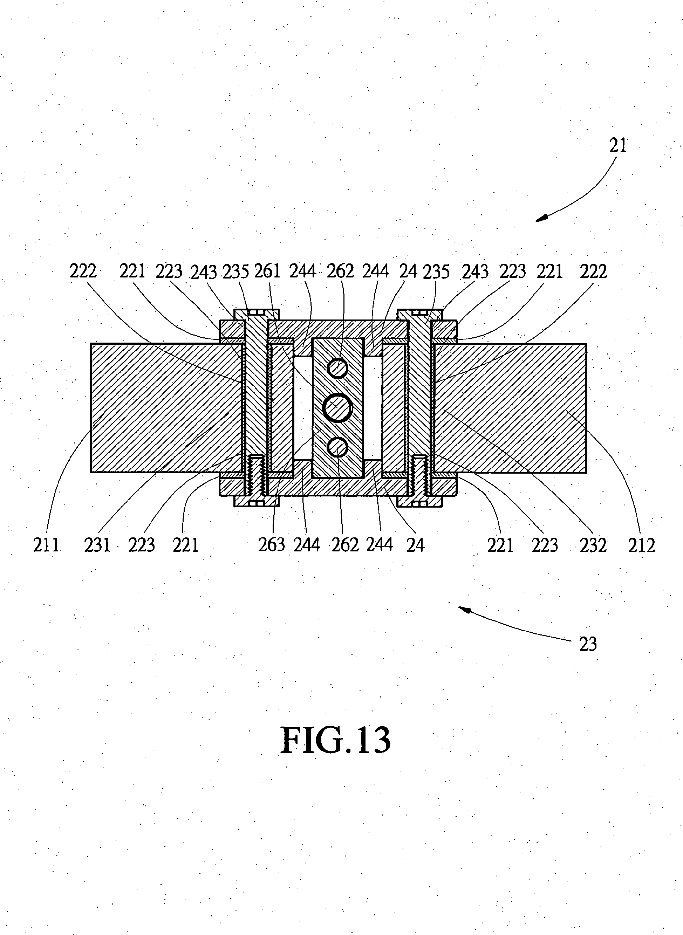

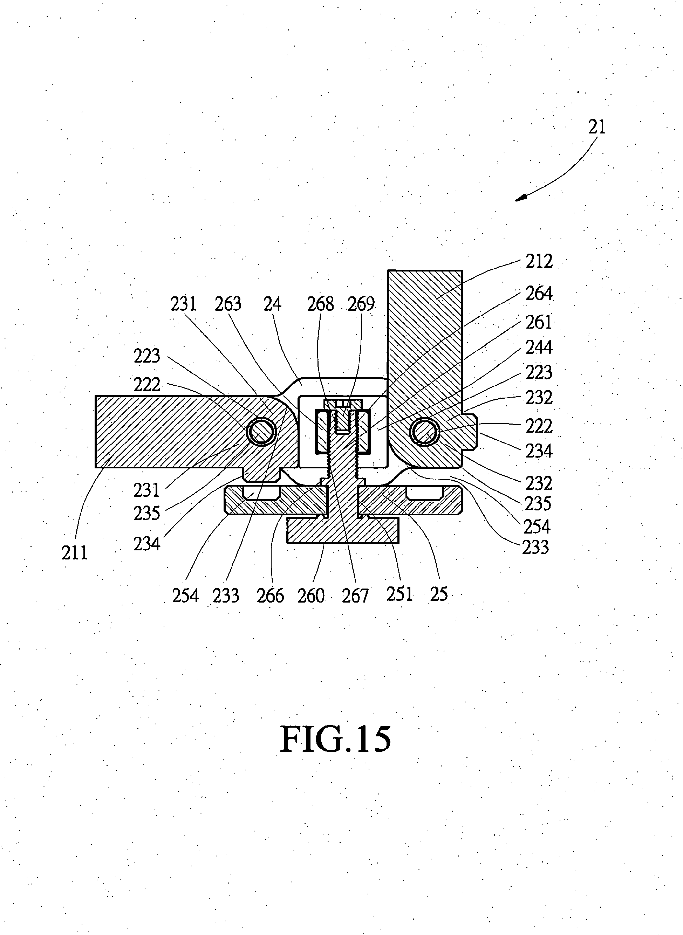

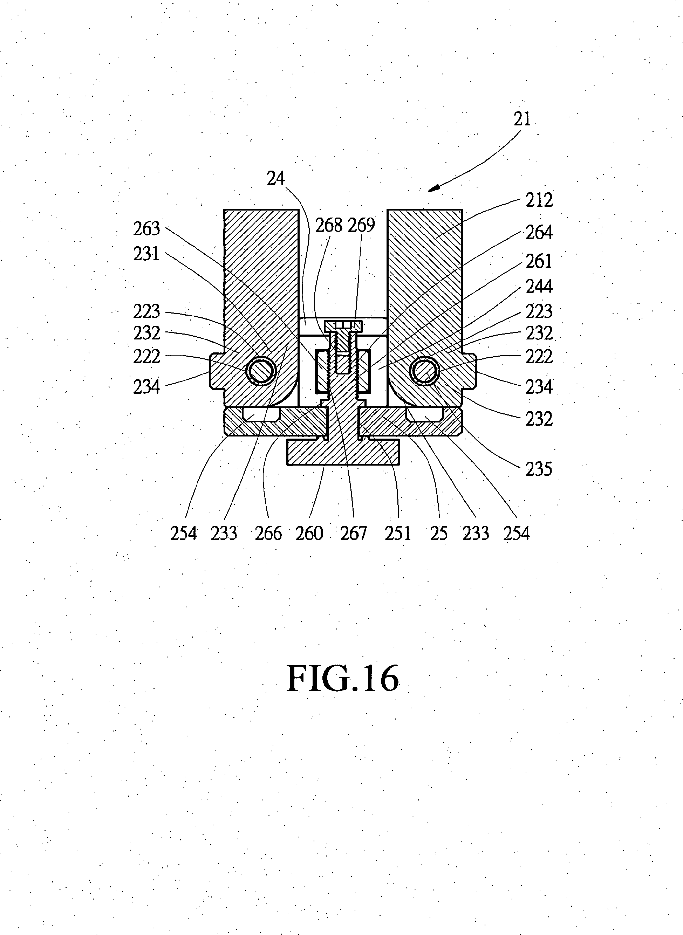

FIGS. 9 to 16 illustrate a second embodiment of the speedy pivoting-and-fixing device for a foldable structure of the present invention. The speedy pivoting-and-fixing device for a foldable structure of this embodiment mainly comprises a structure assembly 21, a pivot assembly 23, a base assembly 24 and a pin 25.

The structure assembly 21 comprises a first structure 211 and a second structure 212. The pivot assembly 23 comprises a first pivot 231 and a second pivot 232 disposed at proximal ends of the first and the second structures 211, 212 respectively. Each of the first pivot 231 and the second pivot 232 is formed with an axial hole 222, and may be formed with a cambered surface 233 at a proximal end thereof so that the first structure 211 and the second structure 212 of the structure assembly 21 can be pivoted by 90° and 180° relative to each other. Projections 234, e.g. tongues may be disposed on the first and the second pivots 231, 232 at positions where the first and the second pivots 231, 232 are joined to the pin 25, while recesses 254 may be formed on the pin 25 at positions where the pin 25 is joined to the first and the second pivots 231, 232. Bearings 221 are disposed at interfaces between the first and the second pivots 231, 232 and the base assembly 24, and bearings 223 may also be disposed inside the axial holes 222 of the first and the second pivots 231, 232.

On the base assembly 24, through-holes 243 corresponding to the axial holes 222 of the first and the second pivots 231, 232 are formed so that, by means of axial bolts 235, the base assembly 24 can be effectively attached to the first and the second pivots 231, 232 or the first and the second pivots 231, 232 can be pivoted into place in a speedy way. The base assembly 24 is formed with a flange 244. The flange 244 is adapted to fix and prevent the first and the second pivots 231, 232 from rotating or pivoting in a locked state of the pin, and also acts as a support against which the pin 25 or a guide slot disposed in the pin 25 abuts when applying a force to compressively fix the pivot assembly 23. The pin 25 fixes the first and the second pivots 231, 232 against loosening in a compressive way.

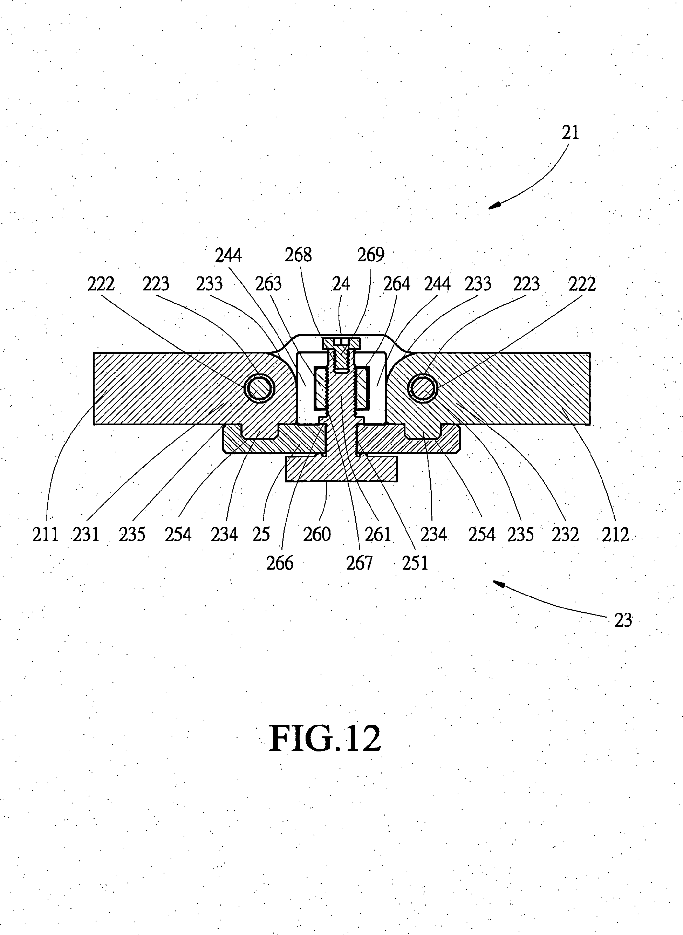

As shown in FIGS. 12 to 14, the pin 25 is of a slab-shaped configuration and is provided with a compressing screw assembly 26. The compressing screw assembly 26 is comprised of a screw head 260, a screw 261, a guide rod 262, a central column 263 and so on. The screw head 260 and the screw 261 are fixedly joined together. The central column 263 is disposed at an inner side of a flange 244 of the base assembly 24 and is formed with a threaded hole 264 and a guide rod hole 265. The screw 261 is inserted through a screw axial hole 251 of the pin 25 and is provided at a middle section thereof with an annular protrusion 266 so that the pin 25 is disposed between the screw head 260 and the annular protrusion 266. A threaded end 267 of the screw 261 is threaded into the threaded hole 264 of the central column 263, and an internal thread 268 and a male screw 269 are provided at a distal end of the screw 261. The male screw 269 may function to prevent the compressing screw assembly 26 from coming off and to loosen the compressing screw assembly 26 for setting the maximum travel distance. The guide rod 262 is threaded into the pin 25 and is inserted through the guide rod hole 265 of the central column 263 so that the pin 25 will not rotate and shift when moving back and forth with the screw head 260 and the screw 261.

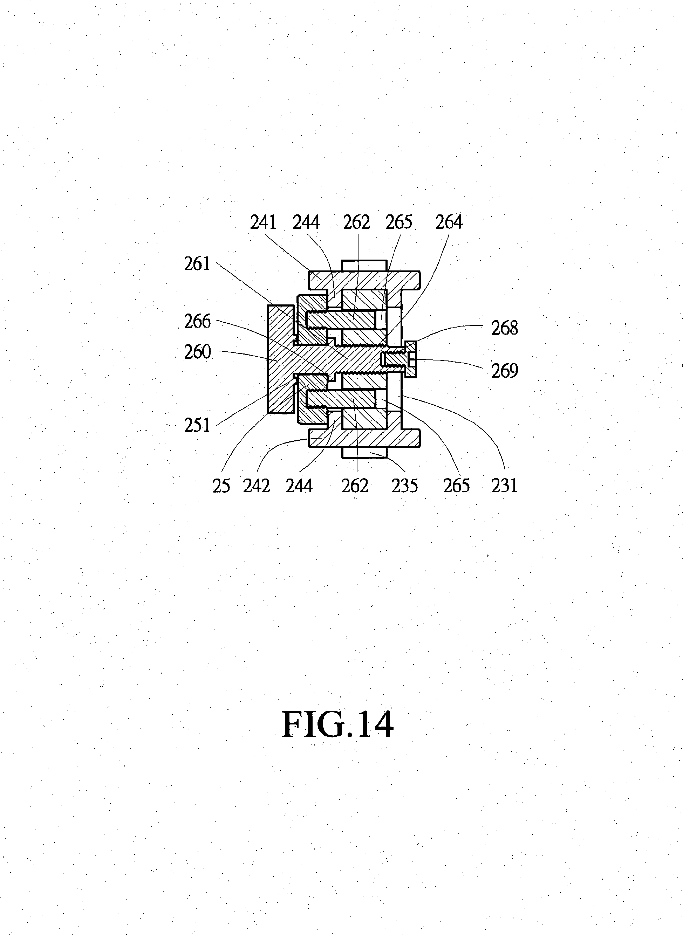

As shown in FIGS. 14 to 16, if one desires to loosen and fold the first and the second structures, he or she only needs to rotate the screw head 260 with a hand so that the screw 261 is loosened to the locating point and, meanwhile, the pin 25 is also loosened to the locating point. Thus, the first and the second pivots 231, 232 are released from being compressed by the pin 25, and the first and the second structures 211, 212 can be pivoted by 90° or 180° and folded. After the first and the second structures 211, 212 have been pivoted by 90° or 180° and folded, the user can rotate the screw head 260 with a hand again and tighten the screw 261 so that the pin 25 abuts against the first and the second pivots 231, 232 again, at which time the first and the second pivots 231, 232 are fixed again as being compressed by the pin 25 without possibility of getting loose. When it is desired to unfold and join the folded first and second structures 211, 212, by simply performing the same operations to loosen and tighten the screw head 260, the first and the second structures 211, 212 can be pivoted to be unfolded and joined in a speed way.

According to the speedy pivoting-and-fixing device for a foldable structure of this embodiment of the present invention, by loosening and tightening the screw head 260 and the screw 261, the first and the second pivots 231, 232 can be pivoted in a speedy way to fold and fix or to join and fix the structure assembly 21 properly. As the speedy pivoting-and-fixing device for a foldable structure of the present invention adopts a threaded connection which provides a powerful compressive force, it has superior safety performance and is effective in preventing undesired consequences caused by a false touch. Moreover, it has a sturdy structure and allows for quick and simple operation.

In another embodiment not being part of the present invention the pivoting-and-fixing device of a foldable structure comprises at least a first structure and a second structure, a first pivot and a second pivot disposed at proximal ends of the first and the second structures, respectively, a base assembly being attached to the first and the second pivots by means of axial bolts, and a pin disposed at a side of the first and second assembly. The pin is releasably engageable with the first and second pivot of the first and the second structures to thereby lock them in their position to each other and allowing them to be pivoted relative to each other in relased state of the pin. Locking can be achieved by clamping and/or through structural engagement of a projection and recess. This embodiment can be combined with any of the features as described in the afore-mentioned embodiments.

In summary, the speedy pivoting-and-fixing device of the present invention may be used for various foldable structures to reliably prevent the foldable structures from loosening in a safe and convenient way. It may be used in various facilities such as foldable bicycle frames, foldable cat ladders, foldable tables & chairs, foldable sport equipment, foldable lamps, foldable beds, foldable sun shields/rain sheds, foldable handles, foldable foot stands, foldable connecting links and the like.

## Claims

1. A speedy pivoting-and-fixing device for a foldable structure, the speedy pivoting-and-fixing device being capable of joining and fixing a foldable truss structure, and comprising:
a structure assembly (11; 21) comprising a first structure (111; 211) and a second structure (112; 212);
a pivot assembly (13; 23) comprising a first pivot (131; 231) and a second pivot (132; 232) disposed at proximal ends of the first and the second structures (111, 112; 211, 212), respectively, and formed with an axial hole (122; 222), respectively;
a base (14; 24) assembly being attached to the first and the second pivots (131, 132; 231, 232) by means of axial bolts (135; 235); and
a pin (15; 25) being disposed on a side of the pivot assembly (13; 23) and adapted to fix the first and the second pivots (131, 132; 231, 232) in a compressive way to effectively fix the first and the second structures (111, 112; 211, 212) against loosening irrespective as to whether the first and the second structures are in an unfolded status or in a folded status after being pivoted by 90° or 180°
**characterised in that**
the base assembly (14; 24) is formed with a flange (144; 244) which forms a support against which the pin (15; 25) or a guide slot disposed in the pin abuts when applying a force to compressively fix the pivot assembly, and **in that**
the flange (144; 244) is adapted to fix and prevent the first and the second pivots (131; 132; 231; 232) from rotating or pivoting in a locked state of the pin (15; 25).

2. Speedy pivoting-and-fixing device according to claim 1, **characterised in that** each of the first and the second pivots (131, 132; 231, 232) is formed with a camfered surface (133) at a proximal end thereof so that the first and the second structures (111, 112; 211, 212) are allowed to pivot by 90° and 180° relative to each other.

3. Speedy pivoting-and-fixing device according to claim 1 or 2, **characterised in that** bearings (121) are disposed at interfaces between the first and the second pivots (131, 132; 231, 232) and the base assembly (14; 24).

4. Speedy pivoting-and-fixing device according to one of claims 1 to 3, **characterised in that** and bearings (123; 223) are disposed inside the axial holes (122; 222) of the first and the second pivots (131, 132; 231, 232).

5. Speedy pivoting-and-fixing device according to one of claims 1 to 4, **characterised in that** projections (134; 234) are disposed on the first and the second pivots (131, 132; 231, 232) at positions where the first and the second pivots (131, 132; 231, 232) are joined to the pin (15; 25), while recesses (154; 254) are formed on the pin (15; 25) at positions where the pin (15; 25) is joined to the first and the second pivots (131, 132; 231, 232), and the projections (135) and the recesses (154) mate with each other in locked state of the pin (15; 25).

6. Speedy pivoting-and-fixing device according to one of claims 1 to 5, **characterised in that** a force applied to compressively fix the pin (15; 25) to the first and the second pivots (131, 132; 231, 232) is a spiral thrust force, an elastic force, a friction force, a magnetic force or a combination thereof.

7. Speedy pivoting-and-fixing device according to one of claims 1 to 6, **characterised in that** the pin (15) is of a T-shaped configuration and is provided with a magnetic compressing assembly (16) and a pressing fastener assembly (17) for preventing loosening.

8. Speedy pivoting-and-fixing device according to claim 7, **characterised in that** the magnetic compressing assembly (16) of the pin (15) is comprised of a magnet (161) and a central column (162), the central column (161) is inserted through a central column guide slot (151) of the pin (15) and fixed in a central column hole (145) of the base assembly (14), the magnet (161) isdisposed in a hollow magnet chamber (152) of the pin (15), the pressing fastener assembly (17) is comprised of a pressing fastener (172) and a magnet assembly (171) having a repulsion force or a spring, and the pressing fastener assembly is disposed in a hollow pressing fastener chamber (153) of the pin (15).

9. Speedy pivoting-and-fixing device according to one of claims 1 to 8, **characterised in that** the pin (25) is of a slab-shaped configuration and is provided with a compressing screw (26) assembly.

10. Speedy pivoting-and-fixing device according to claim 9, **characterised in that** the compressing screw assembly (26) of the pin (25) is comprised of a screw head (260), a screw (261), a guide rod (262) and a central column (263), the central column (263) is fixedly disposed at an inner side of the flange (244) of the base assembly (24) and formed with a threaded hole (264) and a guide rod hole (265), the screw (261) is inserted through the pin (25) and threaded into the threaded hole (264) of the central column (263), and the guide rod (262) is threaded into the pin (25) and adapted to slide in the guide rod hole (265) of the central column (263).

## Patentansprüche

1. Schnelle Dreh- und Befestigungsvorrichtung für eine zusammenklappbare Struktur, wobei die schnelle Dreh- und Befestigungsvorrichtung dazu fähig ist, eine zusammenklappbare Trägerstruktur zu verbinden und zu fixieren, und umfasst:
eine Strukturanordnung (11; 21), umfassend eine erste Struktur (111; 211) und eine zweite Struktur (112; 212);
eine erste Drehzapfenanordnung (13; 23), umfassend einen ersten Drehzapfen (131; 231) und einen zweiten Drehzapfen (132; 232), die an proximalen Enden der ersten bzw. zweiten Struktur (111, 112; 211, 212) angeordnet und jeweils mit einer axialen Bohrung (122; 222) ausgebildet sind;
eine Basisanordnung (14; 24), die mithilfe von axialen Schrauben (135; 235) an dem ersten und dem zweiten Drehzapfen (131, 132; 231, 232) befestigt ist; und
einen Stift (15; 25), der auf einer Seite der Drehzapfenanordnung (13; 23) angeordnet und dazu eingerichtet ist, den ersten und zweiten Drehzapfen (131, 132; 231, 232) zusammenpressend zu fixieren, um die erste und die zweite Struktur (111, 112; 211, 212) effektiv gegen Lockerung zu sichern, unabhängig davon, ob sich die erste und die zweite Struktur in einem nicht zusammengeklapptem Zustand oder in einem zusammengeklapptem Zustand befinden, nachdem sie um 90° bzw. 180° geschwenkt wurden,
**dadurch gekennzeichnet, dass**
die Basisanordnung (14; 24) mit einem Flansch (144; 244) ausgebildet ist, der eine Auflage bildet, an welcher der Stift (15; 25) oder eine in dem Stift befindliche Führungsnut anliegt, wenn eine Kraft aufgewendet wird, um die Drehzapfenanordnung zusammenpressend zu fixieren und dadurch, dass der Flansch (144; 244) dazu eingerichtet ist, den ersten und den zweiten Drehzapfen (131, 132; 231, 232) zu fixieren und in einem verriegelten Zustand des Stifts (15; 25) am Drehen oder Schwenken zu hindern.

2. Schnelle Dreh- und Befestigungsvorrichtung nach Anspruch 1, **dadurch gekennzeichnet, dass** der erste und zweite Drehzapfen (131, 132; 231, 232) jeweils mit einer abgefasten Oberfläche (133) an einem proximalen Ende ausgebildet ist, so dass die erste und die zweite Struktur (111, 112; 211, 212) um 90° und 180° relativ zueinander schwenkbar sind.

3. Schnelle Dreh- und Befestigungsvorrichtung nach Anspruch 1 oder 2, **dadurch gekennzeichnet, dass** Lager (121) an Schnittstellen zwischen dem ersten und dem zweiten Drehzapfen (131, 132; 231, 232) und der Basisanordnung (14; 24) angeordnet sind.

4. Schnelle Dreh- und Befestigungsvorrichtung nach einem der Ansprüche 1 bis 3, **dadurch gekennzeichnet, dass** Lager (123; 223) in den axialen Bohrungen (122; 222) des ersten und des zweiten Drehzapfens (131, 132; 231, 232) angeordnet sind.

5. Schnelle Dreh- und Befestigungsvorrichtung nach einem der Ansprüche 1 bis 4, **dadurch gekennzeichnet, dass** Vorsprünge (134; 234) an dem ersten und zweiten Drehzapfen (131, 132; 231, 232) an Positionen angeordnet sind, an dem der erste und der zweite Drehzapfen (131, 132; 231, 232) mit dem Stift (15; 25) verbunden sind, während Aussparungen (154; 254) an dem Stift (15; 25) an Positionen ausgebildet sind, an welchen der Stift (15; 25) mit dem ersten und dem zweiten Drehzapfen (131, 132; 231, 232) verbunden ist, und die Vorsprünge (135) und die Aussparungen (154) in einem verriegelten Zustand des Stifts (15; 25) miteinander verrasten.

6. Schnelle Dreh- und Befestigungsvorrichtung nach einem der Ansprüche 1 bis 5, **dadurch gekennzeichnet, dass** eine Kraft, die zum zusammenpressenden Fixieren des Stifts (15; 25) an dem ersten und dem zweiten Drehzapfen (131, 132; 231, 232) aufgewendet wird, eine Spiral-Rückstellkraft, eine elastische Kraft, eine Reibungskraft, eine Magnetkraft oder eine Kombination daraus ist.

7. Schnelle Dreh- und Befestigungsvorrichtung nach einem der Ansprüche 1 bis 6, **dadurch gekennzeichnet, dass** der Stift (15) eine T-förmige Konfiguration aufweist und mit einer magnetischen Druckbaugruppe (16) und einer Druckbefestigungsanordnung (17) versehen ist, um Lockerung zu verhindern.

8. Schnelle Dreh- und Befestigungsvorrichtung nach Anspruch 7, **dadurch gekennzeichnet, dass** die magnetische Druckbaugruppe (16) des Stifts (15) aus einem Magnet (161) und einer zentralen Säule (162) besteht, wobei die zentrale Säule (161) durch einen zentralen Säulenführungsschlitz (151) des Stifts (15) eingesetzt und in einer zentralen Säulenbohrung (145) der Basisanordnung (14) fixiert ist, der Magnet (161) in einer hohlen Magnetkammer (152) des Stifts (15) angeordnet ist, die Druckbefestigungsanordnung (17) aus einem Druckbefestigungselement (172) und einer Magnetbaugruppe (171) besteht, die eine Rückstoßkraft für eine Feder aufweist, und die Druckbefestigungsanordnung in einer hohlen Druckbefestigungskammer (153) des Stifts (15) angeordnet ist.

9. Schnelle Dreh- und Befestigungsvorrichtung nach einem der Ansprüche 1 bis 8, **dadurch gekennzeichnet, dass** der Stift (25) eine plattenförmige Konfiguration aufweist und mit einer Druckschraubenanordnung (26) versehen ist.

10. Schnelle Dreh- und Befestigungsvorrichtung nach Anspruch 9, **dadurch gekennzeichnet, dass** die Druckschraubenanordnung (26) des Stifts (25) aus einem Schraubenkopf (260), einer Schraube (261), einer Führungsstange (262) und einer zentralen Säule (263) besteht, wobei die zentrale Säule (263) fest an einer Innenseite des Flansches (244) der Basisanordnung (24) angeordnet und mit einer Gewindebohrung (264) und einer Führungsstangenbohrung (265) ausgebildet ist, die Schraube (261) durch den Stift (23) eingesetzt und in die Gewindebohrung (264) der zentralen Säule (263) geschraubt wird, und die Führungsstange (262) in den Stift (25) geschraubt wird und dazu eingerichtet ist, in der Führungsstangenbohrung (265) der zentralen Säule (263) zu gleiten.

## Revendications

1. Dispositif de pivotement et de fixation rapide pour une structure pliable, le dispositif de pivotement et de fixation rapide étant capable de joindre et de fixer une structure en treillis pliable et comprenant :
un montage de structure (11 ; 21) comprenant une première structure (111 ; 211) et une seconde structure (112 ; 212) ;
un montage de pivot (13 ; 23) comprenant un premier pivot (131 ; 231) et un second pivot (132 ; 232) disposé à des extrémités proximales respectivement de la première et de la seconde structure (111, 112 ; 211, 212) et formé respectivement avec un trou axial (122 ; 222) ;
un montage de base (14 ; 24) qui est attaché au premier et au second pivot (131, 132 ; 231, 232) au moyen de boulons axiaux (135 ; 235) et
une cheville (15 ; 25) qui est disposée sur un côté du montage de pivot (13 ; 23) et adaptée pour fixer le premier et le second pivot (131, 132 ; 231, 232) de manière compressive pour fixer de manière efficace la première et la seconde structure (111, 112 ; 211, 212) contre le desserrement indépendamment du fait de savoir si la première et la seconde structure sont dans un état déplié ou dans un état plié après avoir pivoté de 90° ou de 180°,
**caractérisé en ce que**
le montage de base (14 ; 24) est formé avec une bride (144 ; 244) qui forme un support contre lequel la cheville (15 ; 25) ou une fente de guidage disposée dans la broche bute lorsqu'une force est appliquée pour fixer le montage de pivot de manière compressive et **en ce que** la bride (144 ; 244) est adaptée pour fixer et empêcher le premier et le second pivot (131 ; 132 ; 231, 232) de tourner ou de pivoter lorsque la cheville (15 ; 25) est dans un état bloqué.

2. Dispositif de pivotement et de fixation rapide selon la revendication 1, **caractérisé en ce que** chacun des pivots, le premier et le second pivot (131, 132 ; 232, 232), est formé avec une surface chanfreinée (133) à une extrémité proximale de celui-ci si bien qu'il est permis à la première et à la seconde structure (111, 112 ; 211, 212) de pivoter de 90° et de 180° l'une par rapport à l'autre.

3. Dispositif de pivotement et de fixation rapide selon la revendication 1 ou 2, **caractérisé en ce que** des paliers (121) sont disposés à des interfaces entre le premier et le second pivot (131, 132 ; 232, 232) et le montage de base (14 ; 24).

4. Dispositif de pivotement et de fixation rapide selon l'une des revendications 1 à 3, **caractérisé en ce que** des paliers (123 ; 223) sont disposés à l'intérieur des trous axiaux (122 ; 222) du premier et du second pivot (131, 132 ; 231, 232).

5. Dispositif de pivotement et de fixation rapide selon l'une des revendications 1 à 4, **caractérisé en ce que** des saillies (134 ; 234) sont disposées sur le premier et le second pivot (131, 132 ; 232, 232) à des positions où le premier et le second pivot (131, 132 ; 232, 232) sont joints à la cheville (15 ; 25) tandis que des évidements (154 ; 254) sont formés sur la cheville (15 ; 25) à des positions où la cheville (15 ; 25) est jointe au premier et au second pivot (131, 132 ; 232, 232) et les saillies (135) et les évidements (154) sont accouplés les uns avec les autres lorsque la cheville (15 ; 25) est dans un état bloqué.

6. Dispositif de pivotement et de fixation rapide selon l'une des revendications 1 à 5, **caractérisé en ce qu'**une force appliquée pour fixer la broche (15 ; 25) de manière compressive au premier et au second pivot (131, 132 ; 232, 232) est une force de poussée en spirale, une force élastique, une force de friction, une force magnétique ou une combinaison de celles-ci.

7. Dispositif de pivotement et de fixation rapide selon l'une des revendications 1 à 6, **caractérisé en ce que** la cheville (15) est de configuration en forme de T et est pourvue d'un montage de compression magnétique (16) et d'un montage d'attache par pression (17) pour empêcher le desserrement.

8. Dispositif de pivotement et de fixation rapide selon l'une des revendications 1 à 7, **caractérisé en ce que** le montage de compression magnétique (16) de la cheville (15) est composé d'un aimant (161) et d'une colonne centrale (162), la colonne centrale (161) est insérée par une fente de guidage de colonne centrale (151) de la cheville (15) et fixée dans un trou de colonne centrale (145) du montage de base (14), l'aimant (161) est disposé dans une chambre d'aimant creux (152) de la cheville (15), le montage d'attache par pression (17) est composé d'une attache par pression (172) et d'un montage d'aimant (171) qui a une force de répulsion ou un ressort et le montage d'attache par pression est disposé dans une chambre creuse d'attache par pression (153) de la cheville (15).

9. Dispositif de pivotement et de fixation rapide selon l'une des revendications 1 à 8, **caractérisé en ce que** la cheville (25) est de configuration en forme de plaque et est pourvue d'un montage de vis de compression (26).

10. Dispositif de pivotement et de fixation rapide selon l'une des revendications 1 à 9, **caractérisé en ce que** le montage de vis de compression (26) de la cheville (25) est composé d'une tête de vis (260), d'une vis (261), d'une tige de guidage (262) et d'une colonne centrale (263), la colonne centrale (263) est disposée de manière fixe sur un côté intérieur de la bride (244) du montage de base (24) et formé avec un trou fileté (264) et un trou de tige de guidage (265), la vis (261) est insérée à travers la cheville (25) et est filetée dans le trou fileté (264) de la colonne centrale (263) et la tige de guidage (262) est filetée dans la cheville (25) et adaptée pour coulisser dans le trou de la tige de guidage (265) de la colonne centrale (263).
